# EUROPEAN PATENT SPECIFICATION

(11) **EP 3 191 788 B1**
(45) Date of publication and mention of the grant of the patent: **24.10.2018**
(21) Application number: 15763401.5
(22) Date of filing: 04.09.2015
(51) Int. Cl.: F41H 1/02

(54) **A HARNESS**
HARNISCH
HARNAIS

(30) Priority: 11.09.2014 GB 201416079
(43) Date of publication of application: 19.07.2017
(73) Proprietor: Thales Holdings UK Plc, Reading, Berkshire RG2 6GF (GB)
(72) Inventor: FOLEY, John, Reading, Berkshire RG2 6GF (GB); JONES, Ian, Reading, Berkshire RG2 6GF (GB)
(74) Representative: Round, Edward Mark
(86) International application number: PCT/GB2015/052552
(87) International publication number: WO 2016/038341

(56) References cited:
- WO-A1-2010/037171
- WO-A1-2012/168366
- US-A1- 2009 218 884

## Description

### FIELD:

Embodiments described herein generally relate to Power and Data (P&D) harnesses, in particular for use by infantry soldiers or others engaged in Dismounted Close Combat (DCC), as for instance described in WO2010/037171 A. In particular, some embodiments may provide P&D harnesses and arrangements suitable for use with a range of soldier protection levels, some embodiments of the P&D harnesses being compatible with the tiered structure of soldier load carriage and protection now being promoted in some countries.

### BACKGROUND:

The modern-day soldier in the field requires a number of integrated electronic modules to be run simultaneously, each of these modules generally requiring a power and/or data connection. These modules are located on the soldier's person, generally around the torso area. Often, modules must be worn on the outside of any clothes and body armour. This may be because the modules must be exposed to the environment or because the wearer may need to interact with the modules. As such, a series of power and data connectors must be externally available at various locations around the torso; these connections may be connected to a central processor and/or power unit.

The level of body armour a soldier requires will not only vary on a day to day, or mission to mission basis, but may change during the course of a mission. As such, it often becomes necessary for a soldier to either increase, or decrease, the amount of body armour they are wearing while out in the field. Traditionally, most P&D harnesses are embedded into an armoured vest; this leads to the problem of the wearer either removing the P&D harness and connected modules, or putting a layer of armour on top of the P&D harness and connected modules when modifying the level of body armour worn. This is clearly undesirable and may put the user in danger.

Current Soldier system projects aim to deliver a scalable soldier protection system with an integrated head, torso and load carriage system with the ability for quick release, should a user need to remove the equipment quickly. In particular, it is desired that a soldier be able to change from a low protection system (waistband and webbing) through various stages to a high protection vest (fitted with protective plates) whilst using the same power and data distribution harness. As such, it is desirable to provide a single P&D harness which is compatible with all levels of protection and can accommodate a wearer changing their level of body armour without requiring a different harness or for the harness to be entirely removed. Additionally, it would be beneficial for the harness to be capable of a quick release in line with the body armour quick release.

### DESCRIPTION OF DRAWINGS:

Figure 1 is a front view of a standard load carriage in the form of a yoke.
Figure 2 is a front view of a harness according to the present disclosure.
Figure 3 is a front view of the harness of figure 2 in combination with the load carriage of figure 1.
Figure 4 is a front view of the combination of figure 3, with the braces partially disconnected.
Figure 5 is a front view of the harness of figure 2, with the braces partially disconnected.

### DESCRIPTION OF SPECIFIC EMBODIMENTS:

The present disclosure generally relates to harnesses, and in particular power and data distribution harnesses, suitable for use by military personnel out in the field. It is to be understood that the term "man worn", as used herein, describes a type or arrangement of power and/or data distribution harness which may be suitable for the above-mentioned use. Additionally, while specific harnesses or arrangements may be referred to as power and data distribution harnesses, this does not necessarily require the harness to distribute both power and data over the entire harness to fall within the scope of the present disclosure; rather, the harness may comprise only one of power or data distribution, or may comprise both but each being limited to only part of the harness.

In general there are two types of connection discussed herein - mechanical and electrical. The term "connected" or "connection" used in the present disclosure is generally done so to refer to both a mechanical and electrical connection. This, however, may not necessarily always be the case and in some cases it may be apparent to the skilled reader from the context of the passage that a word is used to refer to only one of the above connections.

As the present embodiment may refer to a harness to be worn by a person, the terms front and back may be used to describe relative locations. "Front" refers to the side of the harness which, when being worn by a user, would generally be located towards, against, adjacent or near the front of the person. "Rear" or "back" refers to the opposite side - that which would be towards, against, adjacent or near the back of the person when the harness or system is being worn. In some embodiments, the harness may be symmetric with the front and rear sides identical - in which case it may make no difference which is the front and which is the rear.

A load carriage, as described herein, may generally refer to a garment or piece of equipment being worn by a user which enables further equipment or devices to be attached thereon and is suitable for supporting and distributing the load associated therewith. A load carriage, as discussed herein, need not be in the form as shown, provided it meets the above requirements and would be viewed as a load carriage by the skilled reader.

According to the invention, a harness having the features of claim 1 is provided.

Although embodiments of the present invention refer to a harness, it is to be understood that the present disclosure is not to be unduly limited by preconceptions as to the form of a harness. A harness, as used herein, is felt to refer to any arrangement of braces and belts, as described in the claims appended hereto, which is suitable for being worn by a user. A power and data distribution system, arrangement or device may also be according to embodiments of the present invention, and it is felt that such terms may be used largely interchangeably with the term harness.

The harness may comprise only one brace. Alternatively, the harness may comprise two braces, or more than two braces. More than one brace may be employed to achieve a required level of redundancy, to ensure the harness performs adequately should a fault in a cable of one of the braces occur.

The harness may comprise only one belt. Alternatively, the harness may comprise two belts, or more than two belts. More than one belt may be employed to achieve a required level of redundancy, to ensure the harness performs adequately should a fault in a cable of one of the belts occur.

Each brace may be connected at corresponding locations on the front side and the rear side of the belt. As such, when in use, each brace may extend substantially vertically relative to the wearer, from the belt connection, up - preferably substantially vertically - and over the wearer's shoulder, then down the other side of the wearer - preferably substantially vertically - to connect to the belt. Alternatively, the brace connections may be arranged so that each brace crosses the wearer's back and/or front substantially diagonally before passing over the shoulder.

The harness may comprise one belt and two braces. One brace may be arranged to pass over each shoulder of the wearer.

A release clip may be located at one of the connection points between the brace and the belt. A release clip may be located at the front connection point between the brace and the belt. In such embodiments the release clip disconnects the brace from the belt. In other embodiments according to the present invention, the release clip may be located at the rear connection point between the brace and the belt. In further embodiments according to the present invention, each brace may comprise a release clip located at both the front and the rear connection points between the brace and the belt.

A belt may comprise at least one release clip. The belt may comprise two, three, four or more than four release clips.

The belt release clip may be of the same design, or may not be the same design, as the release clip of the brace. A belt may require a release clip if the belt entirely encircles a user's waist during use. A buckle on the belt, or on an attached or integrated waistband, may include, incorporate or be integral with a release clip.

A belt of a harness according to the present invention may comprise a release clip.

A release clip may be located substantially at the midpoint of the brace, this midpoint being located at the top of a user's shoulder during use. Alternatively, a release clip may be located at any location along the length of a brace.

In some embodiments according to the present invention, a release clip may be located substantially at the midpoint of the brace and may be a quick release clip, the quick release clip being suitable for being integrated into a master quick release clip of an underlying vest or load carriage and being activated to release upon activation of the master quick release clip. A quick release clip may be instead of, or in addition to, a release clip.

It is often desirable for body armour to include a quick release feature. This allows a user to quickly disconnect and take off the body armour in times of emergency, without having to worry about dealing with the time consuming attachment clips and fasteners required to take the item off during normal use.

Certain embodiments according to the present invention may be compatible with body armour including a quick release feature. Most current quick release catches or quick release clips are located on the top of either or both shoulders of the wearer. As such, in some embodiments a release clip on each brace (or on the belt) is located at the same point as a (or each) quick release feature on the underlying, or overlying, body armour. In some embodiments, the release clip on the harness may interact with, be integral with, or be operably linked to, the quick release clip of the body armour. This may allow a user to unclip both the quick release clip of the body armour and the release clip (and hence in this embodiment a quick release clip) of the harness at the same time and in one action.

In some embodiments according to the present invention, the release clip may be suitable to disconnect and reconnect both the electrical and mechanical connections. Alternatively, the release clip may be suitable to disconnect just the mechanical or electrical connection.

In some embodiments of the present invention, the rear-connection between a brace and a belt may be permanent and not suitable for being disconnected. In other embodiments according to the present invention, a, or each, brace and a belt may be integral, and hence comprise a single piece of cable which forms both the belt and the brace(s).

The belt may entirely encircle a user's waist. Alternatively, the belt or belts may only partially encircle a user's waist, and may not form a complete loop. In some embodiments according to the present invention, the belt may not be located adjacent a user's waist during use, but may instead be located higher up, or lower down, the user's body. For example, in certain embodiments according to the present invention, the belt may be located around, partly around, or adjacent the user's chest.

The term cable is used in a broad sense and may include either a single insulated wire, a series of differently insulated power or data wires, or a combination of the two. The specific type, dimensions or specification of the wire is largely irrelevant in defining the present invention.

Furthermore, cable may be understood to cover any conductive material or textile capable of transferring power or data or any further device which is commonly known to be suitable for such a purpose. As such, any alternative to a conventional "cable" seen as being suitable by a skilled reader falls within the term "cable" as defined herein.

The cables may comprise flat, ribbon-like connection strips.

Each brace may further comprise at least one attachment device to attach the brace to an item worn underneath the harness. A harness according to some embodiments of the present invention would not have the structural rigidity to support external modules. Additionally, it is desirable for the harness to be attachable to the item of clothing or body armour worn under the harness, to prevent the cables or other components from moving and getting in the way of the user during use. Attachment devices may allow the brace and/or belt to be rigidly, hingedly, or flexibly attached to an underlying item, and thus may act to anchor the harness to an item of clothing or body armour. The harness may comprise only one attachment device; alternatively, the harness may comprise multiple attachment devices, to more securely attach the harness to the clothing or body armour.

Each attachment device may be of any design suitable to anchor a harness according to the present disclosure to an underlying item. Such devices would be immediately apparent to a skilled reader, but may include, among other things, a button, popper, clip, tie, Velcro™ strip or magnet.

A belt may comprise at least one attachment device to attach the belt to an item worn underneath the harness.

The discussion relating to the attachment devices for the braces applies mutatis mutandis to those of the belt.

The belt may be integral with a waistband for at least partially encircling a user's waist. As such, the belt may be permanently attached to, removably attachable to, or interwoven with material that may form a waistband around a user's waist. A waistband is discussed in more detail below. The below discussion relating to a waistband apply, mutatis mutandis, to a waistband interwoven with a belt as described here.

Each brace may comprise at least one connector for attachment to an external module.

Connectors may be located anywhere along the length of the braces or belt. Consideration may be given, however, to locations which are more easily accessible to the wearer, as well as avoiding areas where rucksack or baggage straps may need to be located.

The location of all connectors onto braces running closer to the centre of the chest will ensure all key load carriage/rucksack strap areas are kept free. In some circumstances, there may be a need to have flat bridging strips linking connectors on the braces to modules which need to be located off-centre. Further, cross-linking straps, connecting two braces may be employed to help distribute power and/or data to areas of the torso not covered by the standard braces arrangement.

The number of connectors on each brace can vary depending on the size and number of modules required. A single brace may have one, two, three, four or more than four connectors. A brace may have connectors located on the front and/or rear sections of the brace.

The number of connectors on each belt can vary depending on the size and number of modules required. A single belt may have one, two, three, four or more than four connectors. A belt may have connectors located on the front and/or rear sections of the belt.

A connector may also function as an attachment device. Similarly, an attachment device may function as a connector. As such, in some embodiments of the present invention, a single component may function as both an attachment device and a connector.

An external module, as discussed herein, describes an electronic device which requires either a power and/or data connection. This power and/or data connection can be provided via the harness as described in the present disclosure.

A wide range of external modules may be required, depending on the mission being undertaken. The present invention is not limited to use with any single type of external module, nor is it to be limited to use with external modules requiring any single type of power or data connection. Examples of possible external modules with which harnesses according to embodiments of the present invention may be compatible include GPS devices, environment monitoring devices and communication devices.

The specifics of the connectors are not pertinent to the present disclosure and would be immediately apparent to a skilled reader. Such connectors will generally be typical of those used in the art. Each brace may comprise multiple connectors all of the same type and according to the same standard, or may comprise one, or multiple, connectors according to a number of different standards.

The belt may comprise at least one connector for attachment to an external module. The discussion relating to the connector devices for the braces applies mutatis mutandis to those of the belt.

The belt may comprise, or be connected to, a central power unit. The central power unit may provide and/or distribute the power to connectors and/or external modules. The central power unit may be removably connectable to the belt via a connector. Alternatively, the central power unit may be permanently connected, or integral with, the belt.

A waistband or material strap may provide an attachment or connection device to support the central power unit. The belt may provide an attachment or connection device to support the central power unit. The central power unit in some embodiments according to the present invention may instead be located on a brace.

The belt may comprise, or be connected to, a central processor. The central processor may provide, send, receive, distribute, regulate, collect or store data which is received from, or used by the external modules and transferred via the harness. The central processor may be removably connectable to the belt via a connector. Alternatively, the central processor may be permanently connected, or integral with, the belt.

A waistband or material strap may provide an attachment or connection device to support the central processor. The belt may provide an attachment or connection device to support the central processor. The central power unit in some embodiments according to the present invention may instead be located on a brace.

In some embodiments of the present invention, at least two cables, each capable of running an external module, may be connected to a connector.

The at least two cables may be identical and each cable may be suitable to run the external module, independently. Such an arrangement may provide redundancy, ensuring continued operation of the modules even if one of the cables experiences a fault.

A connector may be connected to two, three, four or more than four cables, each capable of running a connected external module independently.

At least two cables, each capable of running an external module, may be connected to each connector.

At least one cable connected to the connector may run each way along the brace. At least one cable may be connected to the connector and may extend in each direction along a brace or a belt. For example, in some embodiments of the present invention a connector may be located mid-way up the front of a brace. In this embodiment, one cable, capable of running an external module connected to the connector, may run down the brace and be connected to the belt i.e. at the front side (which in turn may be connected to the central processor and central power unit). Additionally, a further cable, capable of running an external module connected to the connector, may run along the brace in the opposite direction - up the brace and over the shoulder of the user - and connect to the belt at the opposite side of the brace (i.e. the rear side of the belt). This arrangement may be employed to ensure that should one cable be damaged or broken due to, for example, localised damage at one point on the brace, a further cable, connected to the same external module, is still operational and provides an alternative power and data route back to the central power unit and/or central processor. As such, the operation of the external module may be unaffected by the failure of a single cable.

The above discussion on multiple cables connecting a connector applies mutatis mutandis to a connector located on a belt, as to a connector located on a brace. For example, at least one cable connected to a connector may run each way along a belt, each cable being connected to a central processor or central power unit, as required. Additionally, multiple cables may run in different directions along the belt and/or brace from each and/or every connector.

Further according to another aspect of the invention, the combination of a load carriage and a harness having the features of claim 7 is provided.

The above discussion, relating to possible features and advantages of a harness comprising a belt and brace is applicable, mutatis mutandis, to the harness, belt and brace of this further embodiment of the present invention.

The load carriage may be worn by the user. A load carriage itself may provide little body protection (although this is not necessarily the case). The load carriage can be used to support further layers of body armour, or external modules, and is normally kept on under any further layers of protection. Protection may be increased by installing pads in the load carriage, or attaching protective pads to areas of the load carriage. The load carriage may be the main means or device by which the load from any body armour or external modules is transferred to the wearer. It may thus be imperative that the load carriage fits the wearer well.

In some embodiments according to the present invention, the load carriage may be similar to a "yoke", and simply comprise a plurality of thin strips of material which are worn by a wearer similar to a harness. In other embodiments according to the present invention, the load carriage may be more similar in appearance and coverage to a vest or t-shirt.

The load carriage may be made of fabric. If the load carriage is made of fabric it is more comfortable for the wearer, it also helps to spread any load over a larger area of support.

The load carriage may comprise a padded material. This may further increase the comfort and area over which any load can be distributed.

A load carriage present in some embodiments of the present invention may comprise two webbings. Alternatively, a load carriage present in some embodiments according to the present invention may comprise three, four or more than four webbings.

The number of webbings may correspond to the number of braces, and each webbing may have one corresponding brace. Alternatively, more than one brace may run adjacent to a single webbing, and hence there might be fewer webbings than braces. It is also possible that a single brace runs adjacent more than one webbing.

As with the braces, a webbing may run substantially vertically straight up over the wearer's chest or back, or may alternatively run diagonally, crossing the wearer's chest or back once or more than once, before being connected to the waistband.

A brace may comprise attachment devices for attaching a brace to a webbing.

A belt may comprise attachment devices for attaching the belt to the waistband.

Discussion about attachment devices, above, applies mutatis mutandis to attachment devices as described here.

A belt may be integral with the waistband. The belt may be permanently attached or connected to the waistband. The belt may be interwoven with the waistband. The cables of the belt may be interwoven with the waistband. Discussion relating to a belt being separate to a waistband applies mutatis mutandis to discussion of a belt being somehow integral with a waistband

Additionally according to some embodiments is a method for putting on body armour with a harness according to some embodiments of the present invention, the method comprising: disconnecting a release clip on each brace; removing the brace from a wearer's body, so that body armour may be put on without covering up any of each brace; putting the body armour on; locating each brace over the body armour; and reconnecting each release clip.

Further according to another aspect of the invention, a method having the features of claim 15 is provided.

The method may further comprise disconnecting and reconnecting a release clip on each brace, where present.

Any discussion, above, relating to a harness, belt, brace, load carriage, webbing or waistband, as well as associated features (e.g. connectors and attachment devices) applies, mutatis mutandis, to these embodiments.

A, or each brace may be connectable at only one end to the belt. The term "connectable", as used herein, includes "connected". As such, a brace may be connected to the belt at only one end of the brace. Here, connectable and connected may refer to an electrical connection and/or a mechanical connection of the cables in the belt and the brace.

A brace may be connectable to the side of the belt that, when in use, would be at the front, side or back of a user.

The location of connection between the brace and the belt may be a connection point.

Where a load carriage and harness are provided, a webbing may be continuous over a user's shoulder and may connect to the waistband at both ends thereof, but a brace may extend only part way along or up the webbing. A brace comprising cabling may extend, adjacent to the webbing, for part of the length of the webbing.

A brace may be configured such that it does not, or cannot pass over a user's shoulder. The brace may be of a length such that it is too short to pass over a user's shoulder, or shaped such that it cannot pass over a user's shoulder. A brace may have a length of, or be configured to extend from the belt less than 0.5, 0.4, 0.3, 0.2 or 0.1m. A brace may be configured to extend only part way up a user's chest.

Where it is stated that a brace extends towards a user's shoulder, this is not limited to a brace extending directly at the user's shoulder, but rather the brace extending generally away from the belt, towards the torso of a user and the shoulder region for at least part of its length. As such, a brace that is configured to extend away from the belt may extend generally upward from the belt when worn by a user.

The harness may comprise a plurality of braces, each of which is connected at an end to the belt and configured to extend from the belt towards a user's shoulder.

A brace may comprise an attachment device at the end of the brace that is not connectable to the belt. A brace may comprise an attachment device at the end that is not connected to the belt. The attachment device may be for attaching the brace to an item worn underneath, which may be the webbing.

In an embodiment comprising at least one brace connectable at only one of its ends to the belt and configured to extend from the belt towards a user's shoulder, the brace may be of a length such that both of the brace's ends are on the same side of a user when in use. As such, the brace may not extend over a user's shoulder. This may increase comfort, as a cable running over a user's shoulder can be uncomfortable or painful when a rucksack or other item is carried using the shoulders.

In an embodiment comprising at least one brace connectable at only one of its ends to the belt and configured to extend from the belt towards a user's shoulder, a user may be provided with access to both ends of the brace on the same side of their body (e.g. their front) for attaching or detaching external modules to a connector or attaching or detaching the brace itself from the belt (at one end) or an underlying item (at the other).

When a load carriage is provided, the brace only being connectable at one end and not being configured to extend over a user's shoulder may prevent the brace from having to be threaded through or along a shoulder portion of the webbing. This may also avoid a brace having to be threaded through a quick release clip that may be present in the load carriage. This may reduce complexity.

In other embodiments a load carriage may comprise a webbing connected at only one of its ends to the waistband and configured to extend from the waistband towards a user's shoulder. As such, the webbing may extend only part way up a user's chest and may not extend over a user's shoulder.

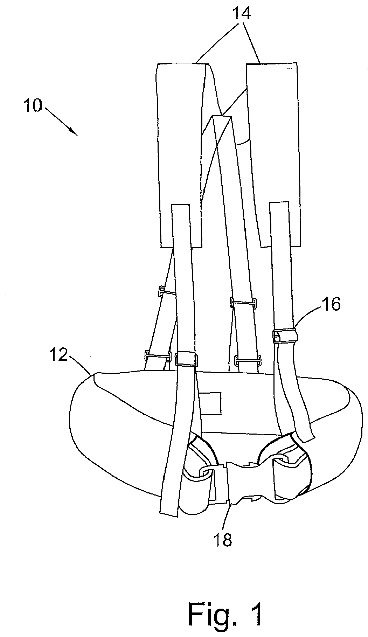

Figure 1 illustrates a load carriage 10. The load carriage in figure 1 comprises a waistband 12, for passing around a wearer's waist, and two webbings 14, for passing over a wearer's shoulders. Each webbing 14 has an adjustment means or device 16 for adjusting the length of the webbings 14. The webbings 14 are attached at either end to the waistband 12. The webbings 14 may be strongly attached to the waistband 12, to ensure large amounts of load can be distributed thereby. The waistband 12 of figure 1 has a buckle 18 at the front to allow the wearer to easily remove the load carriage 10.

The waistband 12 and/or webbings 14 may be made out of a soft material and may be padded to increase comfort and help spread load.

The load carriage 10 is designed to support and transfer the load of a number of other items carried by a soldier when in the field. The load carriage 10 may have numerous modules, satchels or containers attached to it, as well as rucksacks and/or body armour. The load carriage 10 supports these items, and spreads the load to allow the wearer to carry these items with minimal discomfort.

The load carriage 10 may be in the form depicted - comprising a waistband and webbings - or it may be in the form of a vest, with or without body armour.

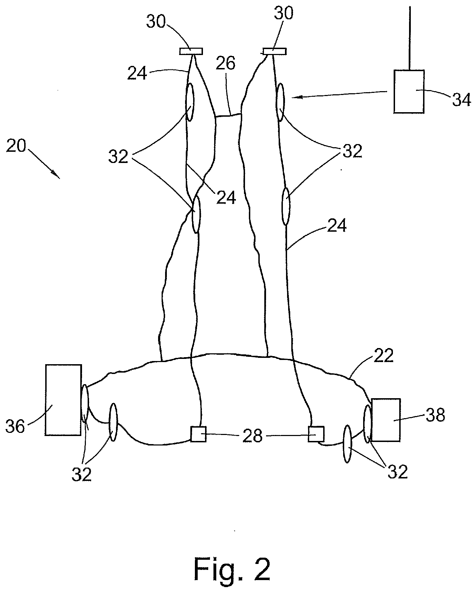

Figure 2 shows a power and data distribution harness, or harness 20, according to some embodiments of the present invention. The harness 20 may comprise one or more belts 22 and one or more braces 24. In the embodiment of figure 2, the harness 20 comprises one belt 22 and two braces 24. The belt 22 and braces 24 comprise cabling which comprises one or more cables suitable for providing power and data connections. The cable may be standard for power and data connectivity as used in the sector. The belt 22 and braces 24 may be substantially entirely cabling, or may also comprise material backing, reinforcement or padding. In the embodiment of figure 2, the belt 22 and braces 24 are substantially entirely formed of cable.

The belt 22 may comprise a complete loop or, as shown in figure 2, a partial loop. In use, the belt may be adjacent a user's waist, abdomen or chest.

It should be understood that while the belt 22 of the present embodiment is generally shown as a separate set of cables which can be laid over the waistband 12 of a load carriage, the belt may, alternatively, be interwoven into the waistband and thus may not be separable therefore. The belt may be integral to the waistband- and thus the load carriage - and still be according to embodiments according to the present invention.

The belt may be integral with the waistband in any embodiment according to the present invention. Discussion regarding the release clips, connectors, central power unit and central processor may apply, mutatis mutandis to a belt separable or separate from the waistband, as to a belt integral with a waistband. Should the belt be integral with the waistband, attachment devices between the belt and waistband, may not be required.

Braces 24 are arranged to extend over a user's shoulders when the harness 20 is in use. Both ends of the braces 24 are connected, or connectable to the belt 22. One, or multiple, cross-links 26 connect the two or more braces 24. Cross-links 26 are provided to enable further backups and redundancies should a failure occur in one part of one of the braces 24. Should part of one of the braces 24 be damaged, the cross-link 26 provides power and/or data to part of the damaged brace 24, using the second brace 24 to bypass the damaged section.

Each brace 24 comprises a release clip 28, or multiple release clips 28 at different locations. Each release clip 28 selectively disconnects and reconnects the brace 24 - either forming a break in the brace 24, or disconnecting the brace 24 from the belt 22. The release clip 28 is capable of both mechanically and electrically disconnecting and reconnecting the brace 24. The release clip 28 may be suitable for disconnecting the power and/or data connections in the brace 24 cable, either at the front, the back, some midpoint of the brace 24, or at all of these locations.

The release clip 28 is mechanically robust, but may not be load bearing. The braces 24 may only be intended to carry power and data, lying over whatever is the top layer of the wearer's apparel. Thus the braces 24, and therefore release clips 28, may not be subject to high loading.

The braces 24 and/or belt 22 may comprise two wires, carrying both data and power. Alternatively, the cabling in the braces 24 and/or belt 22 may comprise wires for USB, Ethernet and/or other power/data distribution infrastructures. Each release clip 28, therefore, may be suitable for disconnecting and reconnect at least one, and more likely all, of these different infrastructures and wires. Thus each release clip 28 may comprise only two pins, or may alternatively comprise 4, 6 or 8 pins - or any intervening or larger number of pins. For example, in some embodiments each release clip may comprise 7 pins, 10 pins, 11 pins or more than 11 pins. In some embodiments of the present invention, a or each connector may comprise a similar connection (i.e. the same number and arrangement of pins) as the release clip.

Each release clip 28, as well as each connector 32 (see below), may be water-proof. They may also be fail-safe, to ensure that once the release clip 28 or connector 32 and external module 34 is disconnected, there is no electrical hazard (i.e. the exposed connection is not live).

Each release clip 28, as well as each connector 32 (see below), may comprise a plastic snap-fit or easy-release structure containing the electrical connections.

Additionally, each release clip 28, as well as each connector 32 (see below) may offer electromagnetic compatibility characteristics to minimise interference.

Suitable release clips and connectors would be apparent to a skilled reader.

The harness 20, may also comprise a, or multiple, quick release clips 30. The quick release clips 30 of the embodiment are provided on each brace 24. Each quick release clip 30 is located at the top of each brace 24, adjacent a wearer's shoulder when the harness 20 is in use.

The quick release clips 30 may be similar in design to the release clips 28. The quick release clips 30 may, however, comprise a design which allows them to be entirely (both mechanically and electrically) disconnected in a very short amount of time. This may allow a user to rapidly remove the harness 20 and any other apparel, quickly, in an emergency.

The quick release clip 30 may be integrated, or capable of being operably linked to a quick release feature in an underlying load carriage 10, vest, or other wearable layer. Thus a single quick release action may activate a plurality of quick release clips, including the quick release clip 30 of the harness 20, to totally remove any equipment on the wearer's upper body.

Features discussed above, in relation to the release clip 28 may apply, mutatis mutandis, to the quick release clip.

The harness 20 comprises at least one connector 32, for attachment of an external module 34. The belt 22 comprises one or more connectors 32, for attachment of an external module 34. Each brace comprises one or more connectors 32, for attachment of an external module 34.

The features discussed in relation to the release clip 28 regarding the electrical and mechanical connectivity, discussed above, applies mutatis mutandis to each connector 32.

Each brace 24 may comprise one, two, three, four or more than four connectors 32. The connectors 32 may be located so as to ensure they are easily accessed by a user wearing the harness 20. The connectors 32 may be located so as to ensure they have easy access to the wearer's immediate environment to measure environmental factors (e.g. sunlight, air pollution, air temperature, air particles indicative of explosives).

Each connector 32 provides sufficient mechanical support and restraining means to ensure the external device 34 does not become detached from the connector 32 unintentionally. Additionally, each connector 32 provides sufficient electrical power and data connections to ensure reliable performance of the external device 34. In the embodiment of figure 2, each connector 32 is not load bearing, and thus is robust, so as to ensure a decent connection, but does not need to bear the load of the external module 34. According to some embodiments of the present invention, the weight of the external module 34 may be borne by the waistband 12 or webbing 14 of the load carriage 10.

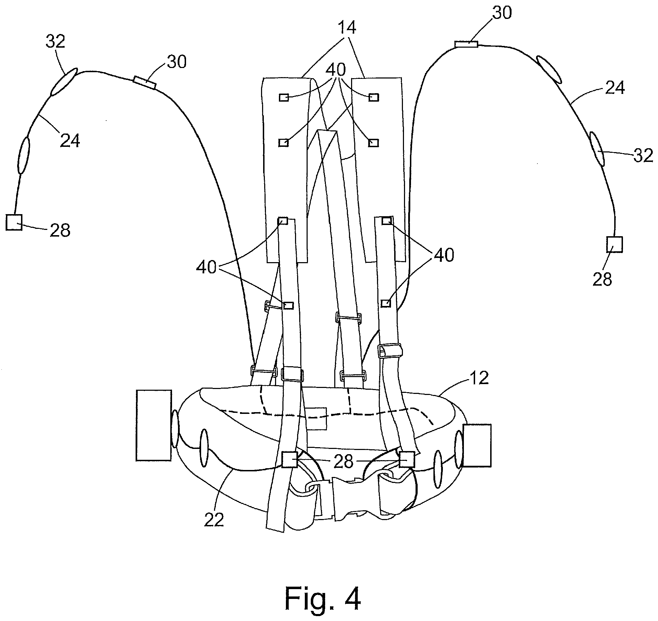

Alternatively, the weight of the external module may in some cases be borne by the connector of the harness. In such a case, the attachment devices (see below) may be load bearing and thus stronger than those of the embodiment of figure 4.

Each connector 32 may comprise the same power and data connections as each other connector 32. Alternatively, all the connectors 32 may not be identical, thus meaning that not all connectors 32 are suitable for connecting all external modules 34.

Each connector 32 comprises a simple mechanical catch to allow the external modules 34 to be connected and disconnected by a wearer, while preventing accidental disconnection.

In the embodiment of figure 2, each brace 24 comprises two connectors 32, located adjacent the chest region, allowing the wearer to easily interact with the external modules 34 which could be connected thereto. Additionally, an example external module 34, is shown, being connectable to the connector 32. The belt 22 of figure 2 also comprises connectors 32, two on either side.

A central power unit 36 and central processor 38 are connected to the belt 22 in some embodiments according to the present invention. These units 36 38 may be connected to the belt 22 as in figure 2, or may be connected to one of the braces 24. These units 36 38 may be connected by means of a connector 32 as described above, or a specialised connector which is only suitable to connect to either the central power unit or the central processor.

The central power unit 36 may comprise a series of batteries or other electrical storage unit and distributes the power to the external modules 34, via the cables and connectors 32, as required.

The central processor 38 comprises the electronics necessary to facilitate the production and storage of, as well as the distribution of, data which is used, monitored, received and created by the external modules 34, via the connectors 32. The components of the central processor 38 may be standard within the industry.

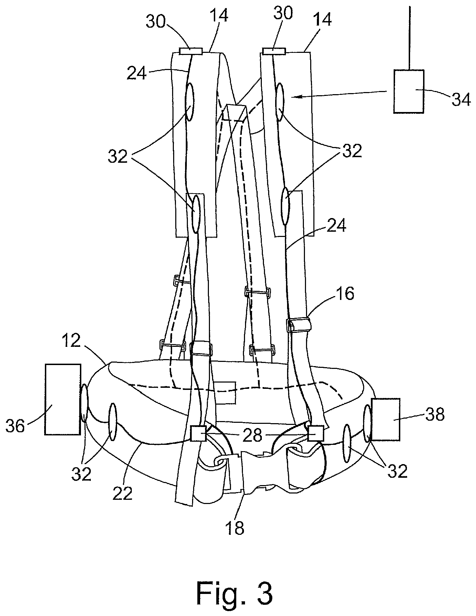

Figure 3 illustrates a load carriage device 10 and corresponding harness 20, according to some embodiments of the present invention. The harness 20 (belt 22 and braces 24) is attached to the load carriage 10 (waistband 12 and webbing 14) by means of at least one attachment means or device 40 (see figure 4).

Each attachment device 40 may be part of the harness 20 or the load carriage 10. Each attachment device may be part of, or attached to, or integral with, both the load carriage and/or the harness. The waistband, webbing, belt and/or brace may comprise at least one attachment device.

In the present embodiment - that of figure 4 - each attachment device 40 is mechanically robust, but not load bearing. Connections between the waistband 12 and webbing 14 of the load carriage 10 may be load bearing and thus may be mechanically strong. Each attachment device 40 is mechanically strong enough to maintain the braces in position, overlying the webbing 14, but not strong enough to support the weight of an external module 34.

Each attachment device may be a simple cable clip. Alternatively, the attachment device may be a loop of Velcro™, tie, popper or any other simple mechanical fixing that would be apparent as suitable to one skilled in the art.

The harness 20 of figure 3 overlies the load carriage 10. Thus the load carriage 10 can be arranged so as to provide any required load support, with the harness 20 acting more as a nervous system, or network, ensuring any external modules 34 (including the central power unit and central processor) are interconnected and supplied with the necessary power and data.

Turning now to figure 4, the load carriage 10 and harness 20 of figure 3 can be seen, wherein the release clips 28 of the harness 20 have been disconnected, releasing the front portion of both braces 24 and allowing the braces 24 to move about their rear connection.

In order to release the front of the braces 24, the release clips 28 have been disconnected/undone, disconnecting the end of the brace 24 and the belt 22. Each brace 24 can then be disconnected from its respective webbing 14, by disconnecting or releasing the attachment devices 40. With the braces 24 released, the attachment devices 16 are visible along the front of each webbing 14.

The braces may be connected to the belt via a release clip at the front and rear and, as such, may be totally disconnectable from the belt. Alternatively, the braces may be connected to the belt 22 via a release clip 28 at only one of the front and rear and, as such, may need to be rotated around the other connection as shown in figure 4.

Alternatively, the braces may be non-releasably connected to the belt and may instead comprise a release clip partway along the brace at a point between the two belt connections. In this case, the release clip may be disconnected and the two parts of the brace may then rotate about each brace-belt connection.

Once the braces 24 are in a disconnected position, as shown, the wearer can put on further equipment over the top of the load carriage 10 without covering up the braces 24 (and hence crucially the connectors 32) of the harness 20. As such, if the new layer (which is now located over the top of the load carriage 10) has attachment devices 40 (or even if no attachment devices are present), the braces 24 can be put over the top of the new layer and reconnected to belt 22 by the release clip 28, thus reconnecting the braces 24. The harness 20 is thus fully connected and may be used for connecting external modules 34 again, despite the fact that the load carriage 10 is now longer accessible. This provides much greater flexibility, allowing a wearer to upgrade or downgrade their body armour level, in the field, without the need to change their load carriage 10 or harness 20.

The cross-link 26 is not shown in figure 4, but it will be apparent that the presence of a cross-link 26 would not affect the operation of the harness 20.

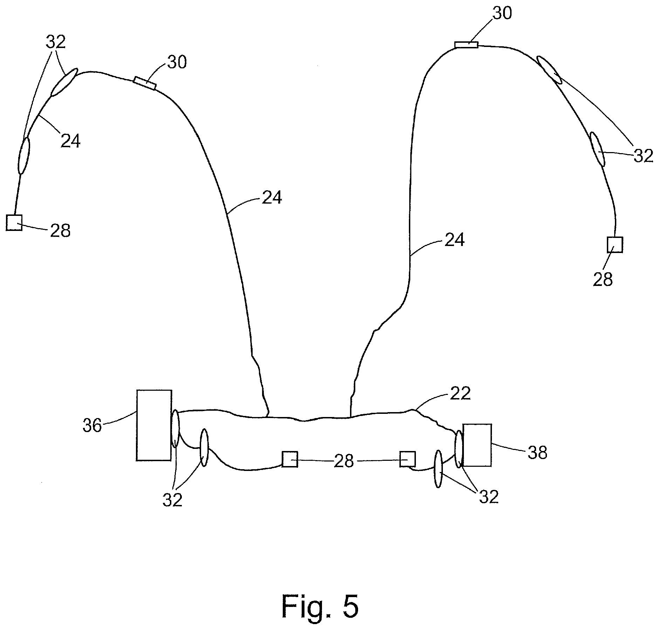

Figure 5 illustrates the harness 20 of figure 4, without the load-carriage 10. It can be seen that the braces 24 are non-releasably connected to the belt 22 at the rear, with the braces 24 then rotating about this connection once the release clips 28 have been disconnected at the front of the belt 22.

## Claims

1. A harness (20), comprising:
a belt (22) for at least partially encircling a user's waist, the belt comprising at least one cable;
at least one brace (24) connectable at only one of its ends to the belt and configured to extend from the belt towards a user's shoulder, said at least one brace comprising at least one cable;
wherein said at least one cable comprises power and/or data cabling **characterized in that** said at least one brace comprises at least one attachment device to attach the brace to an item of clothing or body armour worn underneath the harness.

2. A harness according to claim 1, wherein:
said at least one brace (24) is for passing over a user's shoulder and is connected at both ends to the belt; and said at least one brace comprises at least one release clip, the release clip being for disconnecting and reconnecting the brace.

3. A harness according to claim 1, wherein the harness (20) comprises a connection point between the brace and the belt, and a release clip for disconnecting and reconnecting the brace is located at one of the connection points.

4. A harness according to any of the preceding claims, wherein the belt comprises at least one attachment device to attach the belt to an item worn underneath the harness.

5. A harness according to any of the preceding claims, wherein the belt comprises at least one connector for attachment to an external module.

6. A harness according to any of the preceding claims, wherein the belt comprises, or is connected to, a central power unit or a central processor.

7. The combination of a load carriage (10) and harness (20), comprising:
a load carriage (10), comprising:
at least one webbing (14) for passing over a user's shoulder; and
a waistband (12) for at least partially encircling a user's waist, said at least one webbing being attached at both ends to the waistband;
a harness (20), comprising:
a belt (22) running adjacent the waistband, the belt comprising at least one cable;
at least one brace (24) connectable at only one of its ends to the belt and configured to extend from the belt towards a user's shoulder, said at least one brace comprising at least one cable;
wherein said at least one cable comprises power and/or data cabling,
**characterized in that** said at least one brace (24) comprises at least one attachment device to attach the brace to an item of clothing or body armour worn underneath the harness.

8. The combination of a load carriage and harness according to claim 7, wherein:
at least one brace (24) runs adjacent each webbing;
said at least one brace is connected at both ends to the belt; and
said at least one brace comprises at least one release clip, the release clip being for disconnecting and reconnecting the brace.

9. The combination of a load carriage and harness according to claim 7, wherein the harness (20) comprises a connection point between the brace and the belt, and a release clip for disconnecting and reconnecting the brace is located at one of the connection points.

10. The combination of a load carriage and harness according to claim 7, wherein each brace (24) comprises at least one release clip, the release clip being for disconnecting and reconnecting the brace, wherein the release clip is a quick release clip, the quick release clip being suitable for being integrated into a master quick release clip of an underlying vest or load carriage and being activated to release upon activation of the master quick release clip.

11. The combination of a load carriage and harness according to any of claims 7 to 10, wherein said at least attachment device on said at least brace are for attaching the brace to the webbing.

12. The combination of a load carriage and harness according to any of claims 7 to 11, wherein the belt (22) comprises at least one attachment device to attach the belt to an item worn underneath the harness.

13. The combination of a load carriage and harness according to any of claims 7 to 12, wherein the belt (22) comprises at least one connector for attachment to an external module.

14. The combination of a load carriage and harness according to any of claims 7 to 13, wherein the belt (22) comprises, or is connected to, a central power unit or a central processor.

15. A method for putting on body armour with a harness (20) according to any of claims 1 to 6 or with the combination of a load carriage and harness according to any of claims 7 to 14,
the method comprising:
disconnecting an attachment device on each brace;
removing the brace from a wearer's body, so that body armour may be put on without covering up any of each brace;
putting the body armour on;
locating each brace over the body armour; and
connecting the attachment device on each brace to the body armour.

## Patentansprüche

1. Gurtwerk (20), umfassend:
einen Gurt (22), der die Taille eines Benutzers mindestens teilweise umschließt, wobei der Gurt mindestens ein Kabel umfasst;
mindestens einen Träger (24), der nur an einem seiner Enden mit dem Gurt verbindbar ist und konfiguriert ist, um sich von dem Gurt zu der Schulter eines Benutzers zu erstrecken, wobei der mindestens eine Träger mindestens ein Kabel umfasst;
wobei das mindestens eine Kabel Strom- und/oder Datenverkabelung umfasst, **dadurch gekennzeichnet, dass** der mindestens eine Träger mindestens eine Befestigungsvorrichtung umfasst, um den Träger an einem Kleidungsstück oder Körperpanzerelement zu befestigen, das unter dem Gurtwerk getragen wird.

2. Gurtwerk nach Anspruch 1, wobei:
der mindestens eine Träger (24) dazu dient, über die Schulter eines Benutzers zu verlaufen, und an beiden Enden mit dem Gurt verbunden ist; und der mindestens eine Träger mindestens einen Lösebügel umfasst, wobei der Lösebügel zum Trennen und Wiederverbinden des Trägers dient.

3. Gurtwerk nach Anspruch 1, wobei das Gurtwerk (20) einen Verbindungspunkt zwischen dem Träger und dem Gurt umfasst, und ein Lösebügel zum Trennen und Wiederverbinden des Trägers an einem der Verbindungspunkte angeordnet ist.

4. Gurtwerk nach einem der vorhergehenden Ansprüche, wobei der Gurt mindestens eine Befestigungsvorrichtung umfasst, um den Gurt an einem Gegenstand zu befestigen, der unter dem Gurtwerk getragen wird.

5. Gurtwerk nach einem der vorhergehenden Ansprüche, wobei der Gurt mindestens einen Verbinder zur Befestigung an einem externen Modul umfasst.

6. Gurtwerk nach einem der vorhergehenden Ansprüche, wobei der Gurt eine zentrale Stromversorgungseinheit oder einen zentralen Prozessor umfasst oder damit verbunden ist.

7. Kombination aus einem Lastenträger (10) und einem Gurtwerk (20), umfassend:
einen Lastenträger (10), der Folgendes umfasst:
mindestens ein Gurtband (14), das über die Schulter eines Benutzers verläuft; und
einen Bund (12), der die Taille eines Benutzers mindestens teilweise umschließt, wobei das mindestens eine Gurtband an beiden Enden an dem Bund befestigt ist;
ein Gurtwerk (20), umfassend:
einen Gurt (22), der benachbart zu dem Bund verläuft, wobei der Gurt mindestens ein Kabel umfasst;
mindestens einen Träger (24), der nur an einem seiner Enden mit dem Gurt verbindbar ist und konfiguriert ist, um sich von dem Gurt zu der Schulter eines Benutzers zu erstrecken, wobei der mindestens eine Träger mindestens ein Kabel umfasst;
wobei das mindestens eine Kabel Strom- und/oder Datenverkabelung umfasst,
**dadurch gekennzeichnet, dass** der mindestens eine Träger (24) mindestens eine Befestigungsvorrichtung umfasst, um den Träger an einem Kleidungsstück oder Körperpanzerelement zu befestigen, das unter dem Gurtwerk getragen wird.

8. Kombination aus einem Lastenträger und Gurtwerk nach Anspruch 7, wobei:
mindestens ein Träger (24) benachbart zu jedem Gurtband verläuft;
der mindestens eine Träger an beiden Enden mit dem Gurt verbunden ist; und
der mindestens eine Träger mindestens einen Lösebügel umfasst, wobei der Lösebügel zum Trennen und Wiederverbinden des Trägers dient.

9. Kombination aus einem Lastenträger und Gurtwerk nach Anspruch 7, wobei das Gurtwerk (20) einen Verbindungspunkt zwischen dem Träger und dem Gurt umfasst, und ein Lösebügel zum Trennen und Wiederverbinden des Trägers an einem der Verbindungspunkte angeordnet ist.

10. Kombination aus einem Lastenträger und Gurtwerk nach Anspruch 7, wobei jeder Träger (24) mindestens einen Lösebügel umfasst, wobei der Lösebügel zum Trennen und Wiederverbinden des Trägers dient, wobei der Lösebügel ein Schnelllösebügel ist, wobei der Schnelllösebügel dazu geeignet ist, in einen Hauptschnelllösebügel einer darunterliegenden Weste oder eines darunterliegenden Lastenträgers integriert zu sein und aktiviert zu werden, um sich bei Aktivierung des Hauptschnelllösebügels zu lösen.

11. Kombination aus einem Lastenträger und Gurtwerk nach einem der Ansprüche 7 bis 10, wobei die mindestens eine Befestigungsvorrichtung an dem mindestens Träger zum Befestigen des Trägers an dem Gurtband dient.

12. Kombination aus einem Lastenträger und Gurtwerk nach einem der Ansprüche 7 bis 11, wobei der Gurt (22) mindestens eine Befestigungsvorrichtung umfasst, um den Gurt an einem Gegenstand zu befestigen, der unter dem Gurtwerk getragen wird.

13. Kombination aus einem Lastenträger und Gurtwerk nach einem der Ansprüche 7 bis 12, wobei der Gurt (22) mindestens einen Verbinder zur Befestigung an einem externen Modul umfasst.

14. Kombination aus einem Lastenträger und Gurtwerk nach einem der Ansprüche 7 bis 13, wobei der Gurt (22) eine zentrale Stromversorgungseinheit oder einen zentralen Prozessor umfasst oder damit verbunden ist.

15. Verfahren zum Anziehen eines Körperpanzers mit Gurtwerk (20) nach einem der Ansprüche 1 bis 6 oder mit der Kombination aus einem Lastenträger und Gurtwerk nach einem der Ansprüche 7 bis 14, wobei das Verfahren Folgendes umfasst:
Trennen einer Befestigungsvorrichtung an jedem Träger;
Entfernen des Trägers von dem Körper, der diesen trägt, sodass ein Körperpanzer angezogen werden kann, ohne einen der Träger abzudecken;
Anziehen des Körperpanzers;
Anordnen von jedem Träger über dem Körperpanzer; und
Verbinden der Befestigungsvorrichtung an jedem Träger mit dem Körperpanzer.

## Revendications

1. Harnais (20) comprenant :
une ceinture (22) pour encercler au moins partiellement la taille d'un utilisateur, la ceinture comprenant au moins un câble ;
au moins une bretelle (24) pouvant être raccordée uniquement à l'une de ses extrémités à la ceinture et configurée pour s'étendre de la ceinture vers l'épaule d'un utilisateur, ladite au moins une bretelle comprenant au moins un câble ;
dans lequel ledit au moins un câble comprend un câblage électrique et/ou de données, **caractérisé en ce que** ladite au moins une bretelle comprend au moins un dispositif de fixation pour fixer la bretelle à un vêtement ou à un gilet pare-balles porté au-dessous du harnais.

2. Harnais selon la revendication 1, dans lequel :
ladite au moins une bretelle (24) est prévue pour passer sur l'épaule d'un utilisateur et est raccordée au niveau de ses deux extrémités à la ceinture ; et ladite au moins une bretelle comprend une attache amovible, l'attache amovible étant prévue pour déconnecter et reconnecter la bretelle.

3. Harnais selon la revendication 1, dans lequel le harnais (20) comprend un point de raccordement entre la bretelle et la ceinture et une attache amovible pour déconnecter et reconnecter la bretelle, est positionnée au niveau de l'un des points de raccordement.

4. Harnais selon l'une quelconque des revendications précédentes, dans lequel la ceinture comprend au moins un dispositif de fixation pour fixer la ceinture à un article porté au-dessous du harnais.

5. Harnais selon l'une quelconque des revendications précédentes, dans lequel la ceinture comprend au moins un connecteur pour se fixer à un module externe.

6. Harnais selon l'une quelconque des revendications précédentes, dans lequel la ceinture comprend, ou est raccordée à une unité électrique centrale ou un processeur central.

7. Combinaison d'un support de charge (10) et d'un harnais (20), comprenant :
un support de charge (10) comprenant :
au moins une sangle (14) prévue pour passer sur l'épaule d'un utilisateur ; et
une ceinture (12) pour encercler au moins partiellement la taille d'un utilisateur, ladite au moins une sangle étant fixée, au niveau des deux extrémités, à la ceinture ;
un harnais (20) comprenant :
une ceinture (22) s'étendant de manière adjacente à la ceinture, la ceinture comprenant au moins un câble ;
au moins une bretelle (24) pouvant être raccordée, uniquement au niveau de l'une de ses extrémités, à la ceinture et configurée pour s'étendre à partir de la ceinture vers l'épaule de l'utilisateur, ladite au moins une bretelle comprenant au moins un câble ;
dans laquelle ledit au moins un câble comprend un câblage électrique et/ou de données,
**caractérisée en ce que** ladite au moins une bretelle (24) comprend au moins un dispositif de fixation pour fixer la bretelle à un article de vêtement ou à un gilet pare-balles porté au-dessous du harnais.

8. Combinaison d'un support de charge et d'un harnais selon la revendication 7, dans laquelle :
au moins une bretelle (24) s'étend de manière adjacente à chaque sangle ;
ladite au moins une bretelle est raccordée, au niveau des deux extrémités, à la ceinture ; et
ladite au moins une bretelle comprend au moins une attache amovible, l'attache amovible étant prévue pour déconnecter et reconnecter la bretelle.

9. Combinaison d'un support de charge et d'un harnais selon la revendication 7, dans laquelle le harnais (20) comprend un point de raccordement entre la bretelle et la ceinture, et une attache amovible pour déconnecter et reconnecter la bretelle est positionnée au niveau de l'un des points de raccordement.

10. Combinaison d'un support de charge et d'un harnais selon la revendication 7, dans laquelle chaque bretelle (24) comprend au moins une attache amovible, l'attache amovible étant prévue pour déconnecter et reconnecter la bretelle, dans laquelle l'attache amovible est une attache amovible rapide, l'attache amovible rapide étant appropriée pour être intégrée dans une attache amovible rapide principale d'un gilet ou d'un support de charge et étant activée pour se libérer suite à l'activation de l'attache amovible rapide principale.

11. Combinaison d'un support de charge et d'un harnais selon l'une quelconque des revendications 7 à 10, dans laquelle ledit au moins un dispositif de fixation sur ladite au moins une bretelle est prévu pour fixer la bretelle sur la sangle.

12. Combinaison d'un support de charge et d'un harnais selon l'une quelconque des revendications 7 à 11, dans laquelle la ceinture (22) comprend au moins un dispositif de fixation pour fixer la ceinture sur un article porté au-dessous du harnais.

13. Combinaison d'un support de charge et d'un harnais selon l'une quelconque des revendications 7 à 12, dans laquelle la ceinture (22) comprend au moins un connecteur pour se fixer à un module externe.

14. Combinaison d'un support de charge et d'un harnais selon l'une quelconque des revendications 7 à 13, dans laquelle la ceinture (22) comprend, ou est raccordée à une unité électrique centrale ou à un processeur central.

15. Procédé pour équiper un gilet pare-balles avec un harnais (20) selon l'une quelconque des revendications 1 à 6 ou avec la combinaison composée d'un support de charge et d'un harnais selon l'une quelconque des revendications 7 à 14,
le procédé comprenant les étapes consistant à :
déconnecter un dispositif de fixation sur chaque bretelle ;
retirer la bretelle du corps de l'utilisateur, de sorte que le gilet pare-balles peut être placé sans recouvrir aucune des bretelles ;
enfiler le gilet pare-balles,
positionner chaque bretelle sur le gilet pare-balles ; et
raccorder le dispositif de fixation sur chaque bretelle au gilet pare-balles.
